# EUROPEAN PATENT APPLICATION

(11) **EP 3 678 085 A1**
(43) Date of publication of application: **08.07.2020**
(21) Application number: 18851489.7
(22) Date of filing: 31.08.2018
(51) Int. Cl.: G06Q 50/00, G06Q 50/28, G06Q 10/08, H04L 12/58

(54) **INFORMATION INTERACTION METHOD AND SYSTEM**

(30) Priority: 31.08.2017 CN 201710774907
(71) Applicant: Shenzhen Hive Box Technology Co., Ltd, Shenzhen, Guangdong 518000 (CN)
(72) Inventor: XIONG, Lei, Shenzhen Guangdong 518000 (CN)
(74) Representative: Grünecker Patent- und Rechtsanwälte PartG mbB
(86) International application number: PCT/CN2018/103633
(87) International publication number: WO 2019/042432

(57) **Abstract**

Provided is an information interaction method and system. The method includes: a background server generates an identifier of a logistics terminal cabinet according to longitude and latitude information and a cabinet number reported by the logistics terminal cabinet, and establishes a cabinet cluster according to the longitude and latitude information of the logistics terminal cabinet; when a package is received or sent, the logistics terminal cabinet uploads user information of a user receiving or sending the package to the background server, and searches out a cabinet cluster containing the logistics terminal cabinet corresponding to the user information according to the identifier of the logistics terminal cabinet uploading the user information; and the background server establishes a user community according to the cabinet cluster containing the logistics terminal cabinet corresponding to the user information to implement interaction of social information between users in the community and the cabinet cluster, between the users in the community, and between the users in the community and the background server.

## Description

This application claims priority to Chinese patent application No. 201710774907.7 filed on August 31, 2017, the content of which is incorporated herein by reference in its entirety.

### TECHNICAL FIELD

The present invention relates to the field of computer technology and, for example, an information interaction method and system.

### BACKGROUND

There are two kinds of community social interaction in the society: one is a communication group based on an instant chat software (such as QQ, WeChat and Stranger) or a forum platform; and the other is a community social interaction based on goods or services. The former has problems such as lack of identity authenticity and difficulty in identifying authenticity, which makes intelligent and effective identification impossible. At the same time, the former can only realize a basic group chat function and it has not been in-depth developed, and it cannot effectively implement further communication. The latter aims at services and the like, which lacks effective communication between users, does not effectively break real reinforced concrete walls, and cannot reduce strangeness between neighbors.

### SUMMARY

The present invention provides an information interaction method and system to solve the problem of a poor community social interaction effect.

An information interaction method includes steps described below.

When installation of a logistics terminal cabinet has been completed, the logistics terminal cabinet reports longitude and latitude information and a cabinet number of the logistics terminal cabinet to a background server;
the background server generates an identifier of the logistics terminal cabinet according to the longitude and latitude information and the cabinet number reported by the logistics terminal cabinet, and establishes a cabinet cluster including at least one logistics terminal cabinet according to the longitude and latitude information of the logistics terminal cabinet;
when a package is received or sent, the logistics terminal cabinet uploads user information of a user receiving or sending the package to the background server, and the background server searches out a cabinet cluster containing the logistics terminal cabinet corresponding to the user information according to the identifier of the logistics terminal cabinet uploading the user information; and
the background server establishes a user community according to the cabinet cluster containing the logistics terminal cabinet corresponding to the user information to implement interaction of social information between users in the community and the cabinet cluster, between the users in the community, and between the users in the community and the background server.

An information interaction system includes a background server and a logistics terminal cabinet in communication connection with the background server;
the logistics terminal cabinet is configured to, when installation of a logistics terminal cabinet has been completed, report longitude and latitude information and a cabinet number of the logistics terminal cabinet to a background server;
the background server is configured to generate an identifier of the logistics terminal cabinet according to the longitude and latitude information and the cabinet number reported by the logistics terminal cabinet, and establish a cabinet cluster including at least one logistics terminal cabinet according to the longitude and latitude information of the logistics terminal cabinet;
the logistics terminal cabinet is further configured to, when a package is received or sent, upload user information of a user receiving or sending the package to the background server;
the background server is further configured to search out a cabinet cluster containing the logistics terminal cabinet corresponding to the user information according to the identifier of the logistics terminal cabinet uploading the user information; and
the background server is further configured to establish a user community according to the cabinet cluster containing the logistics terminal cabinet corresponding to the user information to implement interaction of social information between users in the community and the cabinet cluster, between the users in the community, and between the users in the community and the background server.

According to the present invention, the logistics terminal cabinet, the background server and users (i.e., user terminals or mobile terminals) form a community social system with real and effective identity, which breaks the walls between communities. In the community social system, information release and interaction can be implemented through the logistics terminal cabinets and the user terminals, information sharing and secondhand transactions can be implemented among users, and intelligent information inquiry and message push can further be implemented through the users and the background server.

### BRIEF DESCRIPTION OF DRAWINGS

Fig. 1 is a flowchart of a social information interaction method according to an embodiment;
Fig. 2 is a structural block diagram of a social information interaction system according to an embodiment;
Fig. 3 is a structural block diagram of an electronic device according to an embodiment.

### DETAILED DESCRIPTION

The present invention provides an information interaction method and system, which will be described as below. Embodiments described herein are only for a purpose for explaining the present invention and are not intended to limit the present invention.

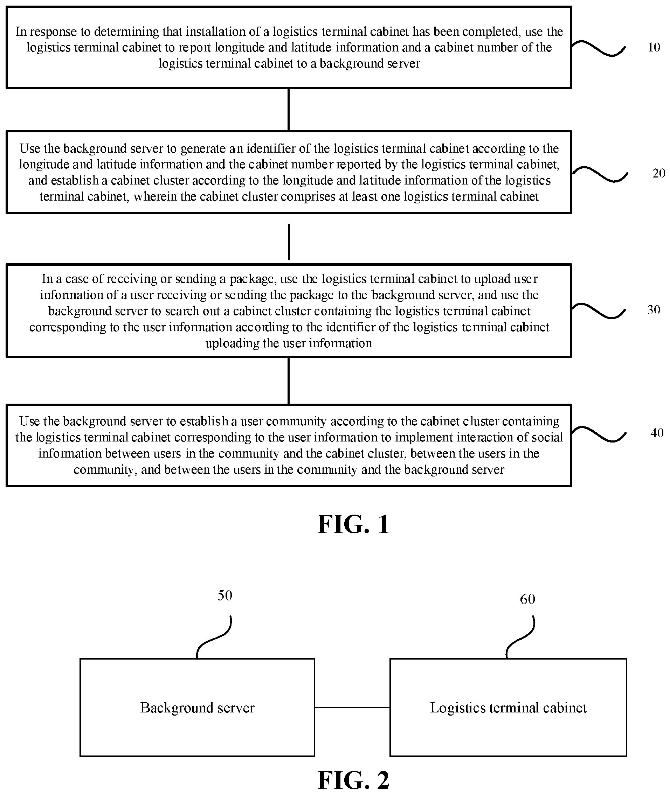

Fig. 1 is a flowchart of an information interaction method according to an embodiment. As shown in FIG. 1, the method according to the embodiment includes steps described below.

In Step 10, when installation of a logistics terminal cabinet has been completed, the logistics terminal cabinet reports longitude and latitude information and a cabinet number of the logistics terminal cabinet to a background server.

In Step 20, the background server generates an identifier of the logistics terminal cabinet according to the longitude and latitude information and the cabinet number reported by the logistics terminal cabinet, and establishes a cabinet cluster including at least one logistics terminal cabinet according to the longitude and latitude information of the logistics terminal cabinet.

In Step 30, when a package is received or sent, the logistics terminal cabinet uploads user information of a user receiving or sending the package to the background server, and the background server searches out a cabinet cluster containing the logistics terminal cabinet corresponding to the user information according to the identifier of the logistics terminal cabinet uploading the user information.

In Step 40, the background server establishes a user community according to the cabinet cluster containing the logistics terminal cabinet corresponding to the user information to implement interaction of social information between users in the community and the cabinet cluster, between the users in the community, and between the users in the community and the background server.

According to the present invention, the logistics terminal cabinet (such as a package cabinet), the user (in an embodiment, a user is presented as a user terminal, such as a mobile phone) and the background server are used to build a community social system, this community social system not only extends functions of the logistics terminal cabinet, but also facilitates neighborhood communication among community residents, which breaks the wall between communities. The method according to this embodiment will be described below, which will take the logistics terminal cabinet (or a cabinet for short) as a package cabinet as an example.

In an embodiment, before the step 10, the method further includes a step in which package cabinets of all networks are connected to the background server through the Internet.

The package cabinets may be installed at a gate of a district, a hall, a shopping mall, an office building and so on, a user may put a package into a grid opening of a package cabinet, and then the package may be taken out and sent to a destination by a courier. A courier may also put the package in a grid opening of the package cabinet and then the package is taken out by a user. That is, the package cabinet provides a temporary package storage function, users may send and pick up a package conveniently, and couriers may also send and pick up packages conveniently.

Based on basic functions of package receiving and dispatching of package cabinets, the present invention expands construction of a community social system. In this way, besides package receiving or sending, users may also use a package cabinet to publish and announce relevant information, and users may use a package cabinet to interact with each other. At the same time, the users may also use a package cabinet as a dimension to establish corresponding community social interaction, so as to break barriers between people in a district.

In the present invention, the package cabinet is connected to the background server first, so that the package cabinet may send information input by a user to the background server, and the information of the background server may be timely fed back and displayed on a display screen of the package cabinet for users to check; meanwhile, the background server may be bond to users and interact with users through a mobile client, and may analyze data to recommend neighbors in a same district and establish a corresponding communication and discussion group.

Package cabinets are already very popular, so the number of the package cabinets is huge, and these package cabinets generally operate 24 hours a day. After the package cabinets are connected to the background server, users may conveniently interact with the package cabinets, the background server and the mobile client anytime and anywhere.

In an embodiment, the package cabinets are connected to the background server through a 4th generation mobile communication technology (4G) network. That is, a 4G module may be integrated into a package cabinet, and package cabinets of all networks may be connected to the background server through the Internet using 4G technology.

In an embodiment, the step 10 includes steps described below.

In step 110, when the installation of the logistics terminal cabinet has been completed, the logistics terminal cabinet starts and performs initialization.

In step 120, the logistics terminal cabinet reports the longitude and latitude information and the cabinet number of the logistics terminal cabinet to the background server.

In the above steps, after the installation of the package cabinet is completed and relevant software is installed, the package cabinet is initialized to start. After these operations are implemented, the longitude and latitude of the package cabinet and other parameters are reported to the background server.

During a reporting process, not only longitude and latitude information of package cabinets, but also cabinet number of theses package cabinets are reported. Since there are many package cabinets due to the large number of districts and office buildings, the longitude and latitude of these package cabinets are often not much different from each other. If only the longitude and latitude are used, an unnecessary coincidence will occur. Therefore, besides the longitude and latitude information, a unique cabinet number will be uploaded to the background server. In an embodiment, the logistics terminal cabinet may also upload information, such as cabinet specifications of the logistics terminal cabinet.

In an embodiment, the step 20 includes steps described below.

In step 210, the background server encrypts the longitude and latitude information and the cabinet number uploaded by the logistics terminal cabinet to generate a unique identifier for the logistics terminal cabinet.

In step 220, the background server establishes the cabinet cluster according to the longitude and latitude information of the logistics terminal cabinet and location distribution of the logistics terminal cabinet in a district, where the cabinet cluster includes at least one logistics terminal cabinet.

In the above steps, the background server sorts out information, such as the longitude and latitude and the cabinet number uploaded by the package cabinet, and generates the unique identifier for each package cabinet, such as A1, A2 or A3, through Hash encryption.

In order to facilitate management of the social system, a cabinet cluster is established according to the latitude, longitude and location distribution of the logistics terminal cabinet in a district. Generally speaking, it is determined whether the longitude and latitude of the package cabinet are within latitude and longitude coverage of the district, and then the package cabinet is added to a corresponding cabinet cluster.

For example, a district has five package cabinets distributed in four directions of the district, and two of the five package cabinets are located close to each other and even in a same location. At this time, the background server needs to place the five package cabinets in a same cabinet cluster according to the latitude and longitude coverage of the district and the longitude and latitude of the package cabinets. In an embodiment, all package cabinets in a same district may be placed in a same cabinet cluster, i.e., a district is taken as a unit. In this way, although different districts may have different sizes and different numbers of package cabinets, it is more conducive to social promotion because people living in a same district have more intersection. Of course, distribution of package cabinets in a cabinet cluster may also be determined according to geographical scope, for example, all package cabinets within a radius of 500 meters are located in a same cabinet cluster using a district center as the center, so that interactions may occur between package cabinets of adjacent cabinet clusters. This can promote communication between cabinet clusters in different districts.

The background server needs to establish a cabinet cluster correspondence table, which includes multiple cabinet clusters, and each cabinet cluster includes one or more corresponding logistics terminal cabinet (marked with the above-mentioned generated unique identifier, such as A1, A2 or A3). At the same time, each package cabinet also generates a user information table. In an embodiment, the user information table includes user information, such as user name, contact information and address, which can facilitate subsequent intelligent screening, location of user living community and working community, also establishment of community social interaction.

In an embodiment, the step 30 includes steps described below.

In step 310, the logistics terminal cabinet receives the user information input by the user, and uploads the user information when it is determined that the input user information is correct and the logistics terminal cabinet is in a screen saver stage.

In step 320, the background server receives the user information, and check and update the user information.

Step 330, the background server searches out the cabinet cluster containing the logistics terminal cabinet corresponding to the user information according to the identifier of the logistics terminal cabinet uploading the user information.

In an embodiment, after a user encapsulates a package, the user may send the package in two manners. In a first manner, the user goes to a package cabinet, fills in package information on the package cabinet, and puts the package in the package cabinet. In a second manner, the user fills in relevant information on a mobile client, goes to a designated package cabinet nearby, and puts the package directly in the package cabinet. The package will be picked up by a courier. In a process of delivery by a courier, information may be inputted in one of following manners: scanning a barcode by the package cabinet using an infrared ray, or scanning a two-dimensional code by a mobile phone. In any case, after the package enters the package cabinet, the package cabinet uploads one or more of its own parameters and user information to the background server when the package cabinet is in the screen saver stage (without influence of its own use). When the data is completely uploaded to the background server, next steps will be executed.

After receiving the user information, the background server checks and updates the user information. In an embodiment, the cabinet cluster searches out whether a mobile phone number of the user information has already been added, if so, the user information is checked (including name, address, etc.) to confirm whether received user information is consistent with saved user information; if not, the saved user information is updated to ensure dynamic update of social data in the community. In addition, since the user information may be temporarily changed, a condition may be set, only when the condition is satisfied, the user information will be modified. For example, if the uploaded user information (which may be one or several items of the user information) is modified to same content for three consecutive times, the user information may be updated, otherwise, the saved user information will not be modified.

At the same time, the background server performs intelligent matching, establishes connection between members in a same family and adds these members to a member list of the family. For example, if the family of Mr. A has five members, his wife B has an account, and his son C also has an account. Mr. A, his wife and his son usually have the same information such as address . When B and C use the same address information for receiving and sending package three or more times, a corresponding member will be added to the member list of the family. That is to say, when a certain user uses a same address as another user to send or pick-up package for three or more consecutive times (e.g., for five consecutive times), these two users are determined to be in a same family, and added to the corresponding member list of the family, and the corresponding address is taken as the family address. In subsequent social activities, some public information may be sent to all members in the member list of the family at the same time, so that all members may share information at the same time.

When an address used by multiple members of the family changes for two consecutive weeks, that is, the address used in the two consecutive weeks is different from saved family address, the family address is considered to be changed, and an announcement or release will be made according to the location region. In this way, an intelligent identification system has been established, which may better identify change of user location according to the longitude and latitude of the package cabinet, thus community social interaction is enabled to be more timely and convenient. When a user without recorded user information presents in a cabinet cluster, for example, it is searched whether the user has implemented a package pick-up or delivery operation in the last month, if not, it is determined that the user is a new user instead of a tourist user. After confirming that the user is the new user, it is searched in database whether the user exists in other cabinet clusters, if so, original user information is matched with current user information, and the original user information is migrated to current cabinet cluster to ensure uniqueness of living community and working community of user.

After obtaining relevant information, through the cabinet cluster correspondence table, the background server first finds a cabinet cluster where the corresponding package cabinet is located according to the uploaded cabinet related information.

In an embodiment, the step 40 includes a step in which the background server establishes the user community according to the cabinet cluster containing the logistics terminal cabinet corresponding to the user information to implement following information interaction:
the social information is published on all logistics terminal cabinets in the cabinet cluster; a user performs interaction of the social information with other user in the community through a client application; and the background server pushes the social information to a user in the community in an active manner or according to a request of the user in the community.

In the step 40, the package cabinet, the background server and the user terminal establish an efficient community social information interaction system. First, there is interaction between the package cabinet and the user terminal. Bulletin boards for property management will be set in a district, information on these bulletin boards is often located at a certain ground physical location, so driving people and others are unable to get it. Based on the community social information interaction system established by the package cabinet, property management personnel may release relevant property management information to the package cabinet, the package cabinet in a non-working state may broadcast news and pictures in turns. In this way, it can play a very good publicity effect in a picking up process of the district. At the same time, for many members of the community, it is also possible to implement lost-and-found items and nearby second-hand transactions at the package cabinet. Implementation of these processes is as follows: a user edits information (i.e., text, pictures and videos) on a mobile terminal (i.e., a user terminal), and then uploads the information to the background server; after the information passes violence and pornography censorship by the background server, the information will be displayed on a package cabinet at the time set by the user. A mode of package cabinet-to-background server-to-user terminal can not only break a simple chat mode of the traditional community social interaction, but also fully expand functions of package cabinets and make full use of the package cabinets.

Secondly, there is interaction between user terminals. After an account is registered for a user terminal, the account may be logged in; a community module of the user terminal positions to a living community or working community. For example, the living community may be established based on the cabinet cluster in the community where the user lives, a user who has used any package cabinet in the cabinet cluster may join in this living community; the working community may be established based on the cabinet cluster in the community where the user works, and a user who has used any package cabinet in the cabinet cluster may join in the working community. In the location community, some service groups of common topics are recommended to users, everyone may enter any group according to his own demand; and of course, he may also establish a corresponding functional demand group. The community has also opened functions, such as posting, uploading photos and videos. These functions may be realized anonymously or in real names. At the same time, this information may also be synchronized to the package cabinets. All of the above are information release and establishment of basic functions of the communication group. Users may also query people in a nearby district, by searching for people in a nearby community, authenticity of all neighbors in the community may be effectively guaranteed. The community module also has many extended functions. For example, people in the community may release an invitation post on a certain topic or a certain matter. After the invitation post has been reviewed, all people in the community may see relevant information to support interested matters. In an embodiment, community voting and second-hand trading modules are also included in the community. Community property and other management service personnel may start a vote to achieve a relevant resolution in real time. The process and the result of the vote are transparent in real time, and every member may see them anytime and anywhere. In this way, not only functions, such as voting and so on can be achieved, but also high efficiency and transparency can be ensured. The second-hand trading module may not only send personal items to a functional platform of the community, but also search a nearest nearby community for pushing.

Finally, there is interaction between the user terminal and the background server. The interaction between the user terminal and the background server mainly includes: the background server pushes relevant information and content to the user terminal, and the user terminal inquires relevant information from the background server. The background server will actively push messages to inquire whether a user switches a package cabinet of a working community or living community, at the same time, some good news for the community is pushed, or neighbors with a same building number are pushed. The user terminal may also query a phone number or contact information of relevant management service personnel, such as residential property, through the background server, and the user terminal may also query progress and process of various public affairs (residence permit handling, etc.) in the district.

Fig. 2 is a structural block diagram of a social information interaction system according to an embodiment. As shown in FIG. 2, the present invention further provides an information interaction system. The system includes a background server 50 and a logistics terminal cabinet 60 in communication connection with the background server 50. In an embodiment, the information interaction system includes multiple logistics terminal cabinets 60.

The logistics terminal cabinet 60 is configured to, when it is determined that installation of the logistics terminal cabinet 60 has been completed, report longitude and latitude information and a cabinet number of the logistics terminal cabinet 60 to the background server 50; the background server 50 is configured to generate an identifier of the logistics terminal cabinet 60 according to the longitude and latitude information and the cabinet number reported by the logistics terminal cabinet 60, and establish a cabinet cluster including at least one logistics terminal cabinet 60 according to the longitude and latitude information of the logistics terminal cabinet 60; the logistics terminal cabinet 60 is further configured to, when a package is received or sent, upload user information of a user receiving or sending the package to the background server 50; the background server 50 is further configured to search out a cabinet cluster containing the logistics terminal cabinet 60 corresponding to the user information according to the identifier of the logistics terminal cabinet 60 uploading the user information; and the background server 50 is further configured to establish a user community according to the cabinet cluster containing the logistics terminal cabinet 60 corresponding to the user information to implement interaction of social information between users in the community and the cabinet cluster, between the users in the community, and between the users in the community and the background server 50.

In an embodiment, when the installation of the logistics terminal cabinet 60 has been completed, the logistics terminal cabinet 60 is configured to reports the longitude and latitude information and the cabinet number of the logistics terminal cabinet to the background server in a following manner: when the installation of the logistics terminal cabinet 60 has been completed, the logistics terminal cabinet 60 starts and performs initialization; and reports the longitude and latitude information and the cabinet number of the logistics terminal cabinet to the background server 50.

In an embodiment, the background server 50 is configured to search out the cabinet cluster containing the logistics terminal cabinet 60 corresponding to the user information according to the identifier of the logistics terminal cabinet 60 uploading the user information, and establishes the cabinet cluster according to the longitude and latitude information of the logistics terminal cabinet 60 in a following manner: the longitude and latitude information and the cabinet number uploaded by the logistics terminal cabinet is encrypted to generate a unique identifier for the logistics terminal cabinet; and the cabinet cluster is established according to the longitude and latitude information of the logistics terminal cabinet and location distribution of the logistics terminal cabinet 60 in a district. The cabinet cluster includes at least one logistics terminal cabinet 60.

In an embodiment, when the package is received or sent, the logistics terminal cabinet 60 is configured to upload the user information of the user receiving or sending the package to the background server 50 in a following manner: when the package is received or sent, the user information input by the user is received, and when it is determined that the input user information is correct and the logistics terminal cabinet 60 is in a screen saver stage, the user information is uploaded; the background server 50 is configured to search out the cabinet cluster containing the logistics terminal cabinet corresponding to the user information according to the identifier of the logistics terminal cabinet uploading the user information in a following manner: when the user information is received, the user information is checked, and when it is determined that the received user information is inconsistent with saved user information, the saved user information is updated; and the cabinet cluster containing the logistics terminal cabinet corresponding to the user information is searched according to the identifier of the logistics terminal cabinet 60 uploading the user information.

In an embodiment, the background server 50 is configured to establish the user community according to the cabinet cluster containing the logistics terminal cabinet corresponding to the user information to implement the interaction of social information between users in the community and the cabinet cluster, between the users in the community, and between the users in the community and the background server in a following manner: the user community is established according to the cabinet cluster containing the logistics terminal cabinet 60 corresponding to the user information to implement following information interaction: release, for a user in the community, of the social information on all logistics terminal cabinets 60 in the cabinet cluster; interaction, for a user in the community, of the social information between at least two users in the community through a client application; and pushing of the social information to a user in the community in an active manner or according to a request of the user in the community.

Technical details of the above module units have been described in the previous method, which will not be described again.

In summary, the present invention forms a community social system with real and effective identity through the logistics terminal cabinet, background server and users (i.e., a user terminal or a mobile terminal), which breaks the wall between communities. In the community social system, the logistics terminal cabinet and user terminals can be used to publish and exchange information, information sharing and second-hand transactions can be implemented among users, and intelligent information inquiry and message push can also be implemented by the users and background server.

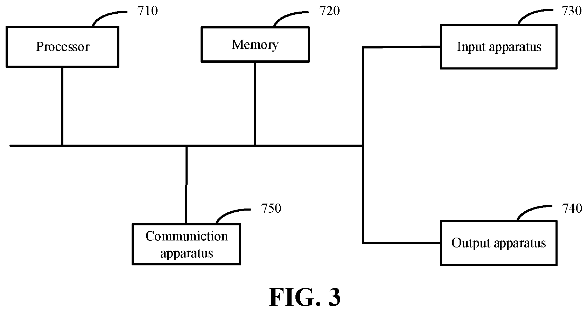

FIG. 3 is a structural block diagram of an electronic device according to an embodiment. As shown in FIG. 3, the electronic device includes one or more processors 710 and a memory 720. In FIG. 3, one processor 710 is taken as an example.

The electronic device may further include an input apparatus 730 and an output apparatus 740.

The processor 710, the memory 720, the input apparatus 730, and the output apparatus 740 in the electronic device may be connected by a bus or other means, a bus connection is taken as an example in FIG. 3.

The input apparatus 730 may receive an input digital or character information, and the output apparatus 740 may include a display device, such as a display screen.

The memory 720 is a computer-readable storage medium, which may be used to store software programs, computer-executable programs and modules. The processor 710 executes various functional applications and data processing by executing software programs, instructions, and modules stored in the memory 720 to implement any one of the above embodiments.

The memory 720 may include a storage program area and a storage data area, where the storage program area may store application programs required by an operating system and at least one function; the storage data area may store data, such as data created according to use of the electronic device. In addition, the memory may include a volatile memory, such as a random access memory (RAM), and may also include a non-volatile memory, such as at least one disk memory device, flash memory device, or other non-transitory solid-state memory device.

The memory 720 may be a non-transitory computer storage medium or a transitory computer storage medium. The non-transitory computer storage medium may include, such as at least one disk memory device, a flash memory device, or other non-volatile solid-state storage devices. In some embodiments, the memory 720 may optionally include a memory remotely disposed relative to the processor 710, which may be connected to the electronic device through a network. Examples of the above network may include the Internet, an intranet, a local area network, a mobile communication network, and combinations thereof.

The input apparatus 730 may be used to receive an input digital or character information, and generate key signal inputs related to user settings and function control of the electronic device. The output apparatus 740 may include a display device, such as a display screen.

The electronic device of this embodiment may further include a communication apparatus 450 that transmits and/or receives information through a communication network.

All or part of flows in the methods of the above embodiments may be completed by executing relevant hardware through a computer program, which may be stored in a non-transitory computer readable storage medium, and the program may include the flows of the above embodiments when executed, where the non-transitory computer readable storage medium may be a magnetic disk, an optical disk, a read-only memory (ROM) or a random access memory (RAM), and so on.

## Claims

1. An information interaction method, comprising:
in response to determining that installation of a logistics terminal cabinet has been completed, using the logistics terminal cabinet to report longitude and latitude information and a cabinet number of the logistics terminal cabinet to a background server;
using the background server to generate an identifier of the logistics terminal cabinet according to the longitude and latitude information and the cabinet number reported by the logistics terminal cabinet, and establish a cabinet cluster according to the longitude and latitude information of the logistics terminal cabinet, wherein the cabinet cluster comprises at least one logistics terminal cabinet;
in a case of receiving or sending a package, using the logistics terminal cabinet to upload user information of a user receiving or sending the package to the background server, and using the background server to search out a cabinet cluster containing the logistics terminal cabinet corresponding to the user information according to the identifier of the logistics terminal cabinet uploading the user information; and
using the background server to establish a user community according to the cabinet cluster containing the logistics terminal cabinet corresponding to the user information to implement interaction of social information between users in the community and the cabinet cluster, between the users in the community, and between the users in the community and the background server.

2. The method according to claim 1, wherein using the logistics terminal cabinet to report the longitude and latitude information and the cabinet number of the logistics terminal cabinet to the background server in response to determining that the installation of the logistics terminal cabinet has been completed comprises:
in response to determining that the installation of the logistics terminal cabinet has been completed, using the logistics terminal cabinet to start and perform initialization; and
using the logistics terminal cabinet to report the longitude and latitude information and the cabinet number of the logistics terminal cabinet to the background server.

3. The method according to claim 1 or 2, wherein using the background server to generate the identifier of the logistics terminal cabinet according to the longitude and latitude information and the cabinet number reported by the logistics terminal cabinet, and establish the cabinet cluster according to the longitude and latitude information of the logistics terminal cabinet comprises:
using the background server to encrypt the longitude and latitude information and the cabinet number uploaded by the logistics terminal cabinet to generate a unique identifier for the logistics terminal cabinet; and
using the background server to establish the cabinet cluster according to the longitude and latitude information of the logistics terminal cabinet and location distribution of the logistics terminal cabinet in a district.

4. The method according to any one of claims 1 to 3, wherein using the logistics terminal cabinet to upload the user information of the user receiving or sending the package to the background server in the case of receiving or sending the package, and using the background server to search out the cabinet cluster containing the logistics terminal cabinet corresponding to the user information according to the identifier of the logistics terminal cabinet uploading the user information comprises:
in the case of receiving or sending the package, using the logistics terminal cabinet to receive the user information input by the user, and upload the user information in response to determining that the input user information is correct and the logistics terminal cabinet is in a screen saver stage;
upon reception of the user information, using the background server to check the user information, and in response to determining that the received user information is inconsistent with saved user information, update the saved user information; and
using the background server to search out the cabinet cluster containing the logistics terminal cabinet corresponding to the user information according to the identifier of the logistics terminal cabinet uploading the user information.

5. The method according to any one of claims 1 to 4, wherein using the background server to establish the user community according to the cabinet cluster containing the logistics terminal cabinet corresponding to the user information to implement the interaction of social information between the users in the community and the cabinet cluster, between the users in the community, and between the users in the community and the background server comprises:
using the background server to establish the user community according to the cabinet cluster containing the logistics terminal cabinet corresponding to the user information to implement following information interaction: release, for a user in the community, of the social information on all logistics terminal cabinets in the cabinet cluster; interaction of the social information between at least two users in the community through a client application; and pushing of the social information to a user in the community in an active manner or according to a request of the user in the community.

6. An information interaction system, comprising a background server and a logistics terminal cabinet in communication connection with the background server, wherein
the logistics terminal cabinet is configured to, in response to determining that installation of a logistics terminal cabinet has been completed, report longitude and latitude information and a cabinet number of the logistics terminal cabinet to a background server;
the background server is configured to generate an identifier of the logistics terminal cabinet according to the longitude and latitude information and the cabinet number reported by the logistics terminal cabinet, and establish a cabinet cluster according to the longitude and latitude information of the logistics terminal cabinet, wherein the cabinet cluster comprises at least one logistics terminal cabinet;
the logistics terminal cabinet is further configured to, in a case of receiving or sending a package, upload user information of a user receiving or sending the package to the background server;
the background server is further configured to search out a cabinet cluster containing the logistics terminal cabinet corresponding to the user information according to the identifier of the logistics terminal cabinet uploading the user information; and
the background server is further configured to establish a user community according to the cabinet cluster containing the logistics terminal cabinet corresponding to the user information to implement interaction of social information between users in the community and the cabinet cluster, between the users in the community, and between the users in the community and the background server.

7. The system according to claim 6, wherein the logistics terminal cabinet is configured to, in response to determining that the installation of the logistics terminal cabinet has been completed, report the longitude and latitude information and the cabinet number of the logistics terminal cabinet to the background server in a manner of:
in response to determining that the installation of the logistics terminal cabinet has been completed, using the logistics terminal cabinet to start and perform initialization; and
reporting the longitude and latitude information and the cabinet number of the logistics terminal cabinet to the background server.

8. The system according to claim 6 or 7, wherein the background server is configured to search out the cabinet cluster containing the logistics terminal cabinet corresponding to the user information according to the identifier of the logistics terminal cabinet uploading the user information, and establish the cabinet cluster according to the longitude and latitude information of the logistics terminal cabinet in a manner of:
encrypting the longitude and latitude information and the cabinet number uploaded by the logistics terminal cabinet to generate a unique identifier for the logistics terminal cabinet; and
establishing the cabinet cluster according to the longitude and latitude information of the logistics terminal cabinet and location distribution of the logistics terminal cabinet in a district.

9. The system according to any one of claims 6 to 8, wherein the logistics terminal cabinet is configured to, in the case of receiving or sending the package, upload the user information of the user receiving or sending the package to the background server in a manner of:
in the case of receiving or sending the package, receiving the user information input by the user, and uploading the user information in response to determining that the input user information is correct and the logistics terminal cabinet is in a screen saver stage;
wherein the background server is configured to search out the cabinet cluster containing the logistics terminal cabinet corresponding to the user information according to the identifier of the logistics terminal cabinet uploading the user information in a manner of:
upon reception of the user information, checking the user information, and in response to determining that the received user information is inconsistent with saved user information, updating the saved user information; and searching out the cabinet cluster containing the logistics terminal cabinet corresponding to the user information according to the identifier of the logistics terminal cabinet uploading the user information.

10. The system according to any one of claims 6 to 9, wherein the background server is configured to establish the user community according to the cabinet cluster containing the logistics terminal cabinet corresponding to the user information to implement the interaction of social information between users in the community and the cabinet cluster, between the users in the community, and between the users in the community and the background server in a manner of:
establishing the user community according to the cabinet cluster containing the logistics terminal cabinet corresponding to the user information to implement following information interaction: release, for a user in the community, of the social information on all logistics terminal cabinets in the cabinet cluster; interaction, for a user in the community, of the social information between at least two users in the community through a client application; and pushing of the social information to a user in the community in an active manner or according to a request of the user in the community.
